# EUROPEAN PATENT APPLICATION

(11) **EP 1 285 616 A1**
(43) Date of publication of application: **26.02.2003**
(21) Application number: 02017801.8
(22) Date of filing: 07.08.2002
(51) Int. Cl.: A47J 37/07

(54) **Barbecue grill and cart assembly**

(30) Priority: 08.08.2001 US 924643
(71) Applicant: W.C. Bradley Company, Columbus, Georgia 31904 (US)
(72) Inventor: Carden, James, Midland, GA 31907 (US); Fry, Tim, Dunchurch, Rugby (GB); Martin, Dave, Great Bar, Birmingham (GB); Hardingham, Amanda-Jane, Earlsdon, Coventry CV5 6GD (GB); Dixon, Julia, Coventry CV5 8DR (GB); May-Russell, Steve Ronald, Coventry CV3 2SR (GB)
(74) Representative: Martin, Didier

(57) **Abstract**

A barbecue grill and cart assembly (10) having a firebox (12) for cooking food including a heat source therein and a firebox support assembly (14) for receiving and supporting the firebox (12). In one embodiment the grill and cart apparatus of the present invention includes a fuel source support platform (30) and a fuel source support guard (32) to facilitate storage of a fuel source (16) on the grill and cart assembly (10). In one embodiment the grill and cart assembly (10) comprises a warming rack (44) fixed to the firebox (12). Also, in an embodiment, the grill and cart assembly (10) of the present invention comprises a folding shelf (58) extending from the firebox support and movable between an extended position and a retracted position.

## Description

### BACKGROUND OF THE INVENTION

### Field of the Invention

The present invention is generally related to gas cooking grills and, more particularly, is related to a barbecue grill and cart assembly, adapted to receive various fuel sources having various configurations, and including a warming rack and at least one folding side shelf.

### Description of Related Art

Gas fired barbecue grills continue to increase in popularity due to their convenience of operation, relatively instant availability for use in cooking, substantially even heat distribution for cooking and warming of food, ease of clean-up, and versatility to cook numerous varieties of foods. Gas grills can be, however, cumbersome and generally require a sufficient amount of space for both storage and operation. Gas grills are generally fueled by a fuel such as propane, which is typically stored in a heavy, cumbersome tank, such as an LP tank, or the like, (fuel source). Despite the possible drawbacks, it is also desirable that the grill be readily movable.

A fuel source in communication with the grill in order to supply fuel thereto but remaining resting on the ground, and therefore separate from the grill assembly, can hinder portability of the grill. The separately stored fuel tank also requires additional storage space, which can be at a premium in a garage or other storage area. Storage of the fuel tank on the grill and/or cart assembly itself can be difficult and also hinder portability due to the varying sizes of fuel tanks and the weight of the fuel tank. Storage of the fuel tank on the grill itself also requires that the tank be sufficiently secured to the grill or cart assembly to prevent the fuel tank from tipping over or falling off.

It is also desirable that gas grills have capabilities for warming or heating food at a lower temperature than is required for cooking. This is typically achieved with a secondary rack suspended above the main cooking surface. The secondary rack is further away from the heat source of the grill and typically fixed to the grill lid in a pivoting manner, such that the secondary rack is substantially parallel to the cooking rack when the lid is in the closed or open position. Attaching the secondary rack to the grill lid, however, has inherent problems. The need for holes or apertures in the lid for mounting the secondary rack drives up manufacturing costs and compromises the heat seal of the lid, allowing heated interior air needed for cooking and warming to escape. The pivoting connection also results in a somewhat unsteady rack. Since the rack moves each time the lid is opened or closed items can fall off of the secondary rack onto the cooking rack as the lid is being moved between the closed and opened positions.

Storage space or a working surface away from the heat source but near the grill is also desirable. Such storage space is commonly supplied on grill assemblies as a side shelf, or the like. These side shelves typically extend outwardly from the grill assembly thereby requiring excess space for both the storage and use of the grill.

Thus, a heretofore unaddressed need exists in the industry to address the aforementioned deficiencies and inadequacies.

### SUMMARY OF THE INVENTION

The present invention relates to a barbecue grill and cart assembly having a firebox for cooking food including a heat source therein and a firebox support assembly for receiving and supporting the firebox. In one embodiment the grill and cart assembly of the present invention includes a fuel source support platform and a fuel source support guard to facilitate storage of the fuel source on the grill and cart assembly. In one embodiment the grill and cart assembly comprises a warming rack fixed to the firebox. Also, in an embodiment, the grill and cart assembly of the present invention includes a collapsible shelf extending from the firebox support and movable between an extended position and a retracted position.

### BRIEF DESCRIPTION OF THE SEVERAL VIEWS OF THE DRAWING

The invention can be better understood with reference to the following drawings. The components of the drawings are not necessarily to scale, emphasis instead being placed upon clearly illustrating the principles of the present invention. Moreover, in the drawings, like reference numerals designate corresponding parts throughout the several views.
FIG. 1 is a perspective view of the present Barbecue Grill and Cart Assembly;
FIG. 2 is a partial, exploded view of the cart;
FIG.3 is a partial, exploded view of the upper portions of the grill and cart assembly; and
FIG. 4 is a partial, exploded view of the folding shelf connection to the cart.

### DETAILED DESCRIPTION OF THE INVENTION

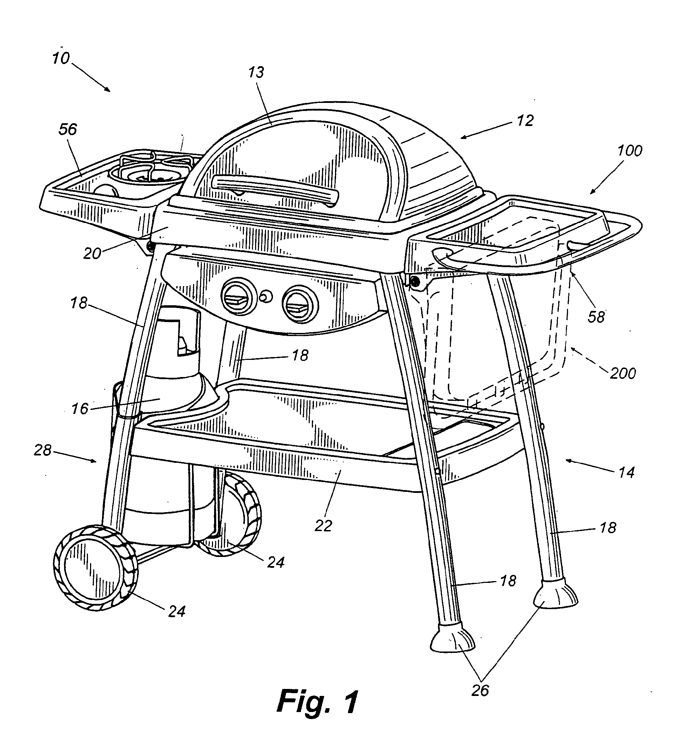

As described herein, embodiments of the barbecue grill and cart assembly are adapted for the heating and cooking of various foods. Turning first to FIG. 1, the barbecue grill and cart assembly 10 of the present invention comprises a firebox 12 for cooking food, and a firebox support assembly 14 for supporting said firebox 12. The firebox support assembly 14 preferably comprises support legs 18 and a firebox frame 20 supported by the legs 18. The firebox support assembly 14 can optionally include a midlevel shelf 22 supported by the support legs 18 and disposed below the firebox frame 20. The firebox frame 20 is supported by the legs 18 and arranged and configured to substantially correspond to the firebox 12 and receive the firebox 12 therein. For portability and stability, wheels 24 are preferably disposed on two legs 18 while feet 26 are disposed on the opposite two legs 18. It should be noted that although the firebox support assembly 14 is described herein as having four support legs 18, it should be understood that the firebox support assembly 14 can comprise any number of support legs 18 and in any configuration suitable to support the firebox frame 20.

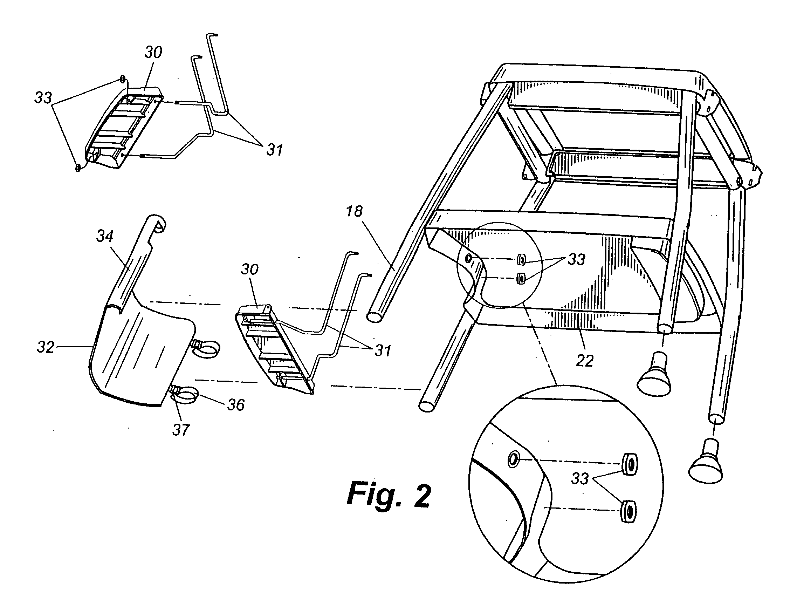

The firebox support assembly 14 accommodates a fuel source 16, such as an LP tank, or the like, with a fuel source support assembly 28, in a releasable manner. FIG. 2 illustrates an embodiment of a fuel source support assembly 28 of the present invention. The fuel source support assembly 28 comprises a fuel source support platform 30 arranged and configured to releasably receive a fuel source 16 and a fuel source support guard 32 arranged and configured to releasably receive a fuel source 16. The fuel source support platform 30 can be fixed to the firebox support assembly 14 at the midlevel shelf 22, or at any suitable position. It is preferable that the platform 30 supports the fuel source above the ground on which the grill 10 is placed and that the fuel source platform 30 is substantially planar and composed of a substantially rigid, durable material. Platform 30 is preferably mounted to the cart with struts 31 that are configured to support the back of the tank, regardless of its particular girth or height. The struts are normally secured to platform 30 and to the shelf 22 in any suitable manner, such as fasteners 33. The fuel support guard 32 is fixed to the firebox assembly 14, preferably by being arranged and configured to releasably receive portions of said firebox assembly 14. Said portions can advantageously comprise support legs 18. In the preferred embodiment shown in FIGs. 1 and 2, the fuel support guard 32 is attached to the firebox support assembly 14 at the support legs 18, preferably by releasable fixing means such as a sheath 34 engaging one support leg 18 and at least one strap 36 engaging opposing legs 18. The strap 36 can be easily fastened and unfastened about the support leg 18 for easy removal and replacement of the fuel source 16.

Advantageously, the fuel support guard 32 is size adjustable to accommodate fuel sources 16 of various sizes. In the embodiment shown on figures, the strap 36 can comprise a buckle 37, or the like, for adjusting the size of the fuel support guard 32, thereby accommodating fuel sources 16 of various sizes. As such, it is preferable that the fuel source support guard 32 comprises a substantially flexible material. Although a pair of straps 36 are illustrated herein, it should be understood that any suitable number of straps 36 or any suitable fixing means can be implemented. Preferably said fuel source support guard 32 substantially corresponds to the shape of the fuel source 16, as shown in FIGs. 1 and 2. Preferably, said fuel source support guard 32 substantially corresponds to the lateral shape of the fuel source 16.

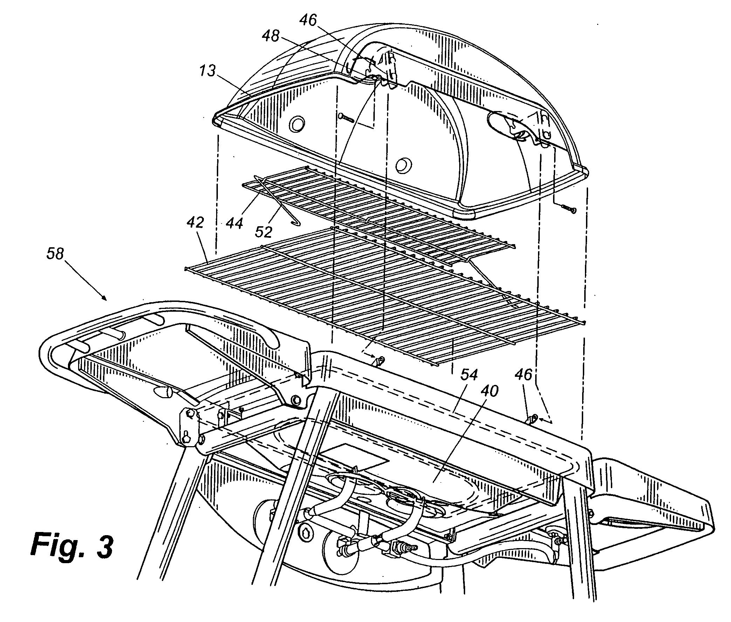

An embodiment of an interior portion of the firebox 12 is illustrated in FIG. 3. In said embodiment, the barbecue grill and cart assembly 10 comprises a firebox 12 for cooking food, said firebox 12 including a heat source 40 disposed therein and a firebox cover 13 substantially corresponding to said firebox 12. The firebox 12 also comprises a cooking rack 42 disposed in said firebox 12 substantially proximate to said heat source 40 and a warming rack 44. Said cooking rack 42 is preferably disposed in said firebox 12 in a removable manner. Said warming rack 44 is fixed to the firebox 12 above said cooking rack 42, such that said cooking rack 42 is disposed between said warming rack assembly 44 and said heat source 40. Said warming rack 44 is preferably fixed to the firebox 12 in a removable manner. Preferably, the warming rack 44 is supported by means, such as a hinge bracket 46 and a rack support bracket 48 in combination. Preferably, the hinge bracket 46 is fixed to the interior of the firebox cover 13 and to the interior of the firebox 12, thereby hingedly connecting the firebox cover 13 to the firebox 12. The rack support bracket 48 is fixed to the hinge bracket 46 and extends away therefrom, into the interior of the firebox 12 and over the cooking rack 42. The rack support bracket 48 includes means, such as a receiving end 50 arranged and configured to releasably receive a portion of the warming rack assembly 44. The receiving end 50 of the rack support bracket 48 is illustrated herein as being substantially C-shaped, however it should be understood that the receiving end 50 can comprise any suitable shape for providing stable support and easy replacement and removal of the warming rack, such as for cleaning. The warming rack 44 further includes a rack support means, such as a rack leg 52 extending downward toward the firebox 12 and the cooking rack 42 for supporting the warming rack 44 above said cooking rack 42. The interior portion of the firebox 12 can further comprise a support aperture 54 for releasably receiving and supporting the rack support leg 52 of the warming rack 44. The support aperture 54 can comprise a hole, indentation, or any suitable means for supporting the rack support leg 52.

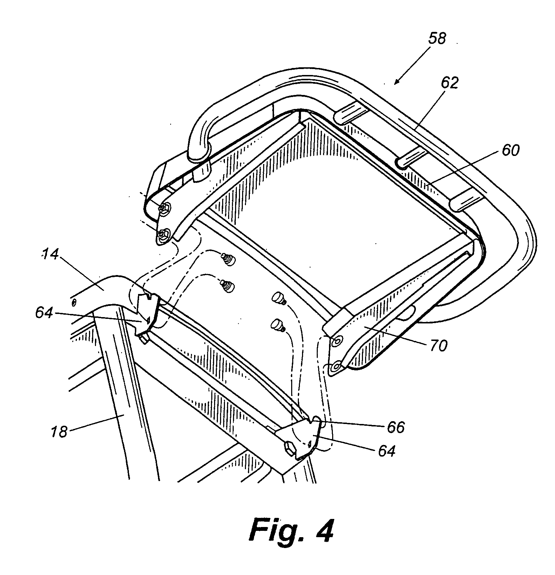

Turning again to the cart assembly 10 shown in FIGs. 1 and 4, the firebox 12 has an exterior portion (or peripherical portion) and an interior portion, which interior portion has a heat source 40 disposed therein. The barbecue grill and cart assembly 10 advantageously comprises a folding shelf 58, said folding shelf being hingedly fixed to said exterior portion of said firebox 12. Said cart assembly 10 can also comprise a burner shelf 56 for a side burner, extending outwardly from frame 20. Said folding shelf 58 is advantageously extending outwardly from said firebox 12, said folding shelf 58 opposing the burner shelf 56. Although a cart assembly 10 comprising both the burner shelf 56 and a folding shelf 58 extending therefrom is disclosed herein, it should be understood that the present cart can comprise either none, one or both the burner shelf 56 and a folding shelf 58 in any number and combination. FIG. 4 illustrates the folding shelf 58 in greater detail. The folding shelf 58 preferably comprises a substantially planar shelf body 60 having preferably a handle 62 disposed thereon. It is preferable that the handle 62 extends from the shelf body 60 such that the handle 62 can be gripped by a user to facilitate moving the grill 10. As such, it is preferable that a folding shelf 58 extends from the firebox 12 on the side of the firebox support assembly 14 having feet 26 rather than wheels 24 disposed thereon. In this configuration, the handle 62 can be grasped by the user to raise the feet 26 off of the ground and move the grill as desired using the wheels 24. The folding shelf 58 is attached to at least one shelf bracket 64, preferably fixed to the exterior portion of the firebox 12 and extending outwardly from the firebox frame 20 of the firebox support assembly 14. The shelf bracket 64 can also extend from the firebox 12. A preferred shelf bracket 64 comprises a keyhole aperture 66 disposed below an open U-shaped aperture 68. The shelf body 60 engages the shelf bracket 64 with a shelf support 70 fixed to the shelf body 60 and arranged and configured to engage said keyhole aperture 66 and said U-shaped aperture 68. Preferably, said support 70 is arranged and configured to receive means, such as bolts, or the like, therethrough in alignment with the keyhole aperture 66 and the U-shaped aperture 68 of the shelf bracket 64. Although the shelf support 70 is described herein as extending the length of the shelf body 60, it should be understood that any configuration that is suitable to engage the shelf bracket 64 can be implemented. Said U-shaped aperture 68 is preferably arranged and configured to release a portion of said shelf support 70 such that said shelf support pivots about said keyhole aperture 66. When the folding shelf 58 is disposed in the extended position 100, the shelf support 70 is engaged by both the U-shaped aperture 68 and the keyhole aperture 66. To dispose the folding shelf 58 in the retracted position 200, the folding shelf 58 can be grasped by the user near its inner edges and lifted upward, thereby disengaging the shelf support 70 from the U-shaped aperture 68. The keyhole aperture 66 allows the attaching member joining the shelf support 70 to the shelf bracket 64, such as a bolt, or the like, to move laterally therein. The folding shelf 58 can then be pivoted about the keyhole aperture 64 until the shelf 58 is disposed in the retracted position 200. In this configuration, the grill and cart assembly 10 require less room for storage and use.

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of the present invention and protected by the following claims.

## Claims

1. A barbecue grill and cart assembly (10) comprising:
- a firebox (12) for cooking food, said firebox (12) having a heat source (40) disposed therein;
- a firebox support assembly (14) for supporting said firebox (12);
- a fuel source support assembly (28) comprising a fuel source support platform (30) and a fuel source support guard(32);
said fuel source support platform (30) being fixed to said firebox support assembly (14) and arranged and configured to releasably receive a fuel source (16), and
said fuel source support guard (32) being fixed to said firebox support assembly (14) and arranged and configured to releasably receive said fuel source (16), wherein said fuel source support guard (32) substantially corresponds to the shape of the fuel source (16).

2. The barbecue grill and cart assembly (10) of claim 1, wherein said fuel source support platform (30) comprises a substantially rigid material.

3. The barbecue grill and cart assembly (10) of any of claim 1 or 2, wherein said fuel source support platform (30) is arranged and configured to support said fuel source (16) above ground on which the grill (10) is positioned.

4. The barbecue grill and cart assembly (10) of any of claims 1 to 3, wherein said fuel source support guard (32) is arranged and configured to releasably receive portions (18) of said firebox support assembly (14).

5. The barbecue grill and cart assembly (10) of any of claims 1 to 4, wherein said fuel source support guard (32) comprises substantially flexible material.

6. The barbecue grill and cart assembly (10) of any of claims 1 to 5, wherein said fuel source support guard (32) is size adjustable to accommodate fuel sources (16) of various sizes.

7. The barbecue grill and cart assembly (10) of any of claims 1 to 6, further comprising a fuel source (16).

8. A barbecue grill and cart assembly (10) of any of claims 1 to 7 comprising:
- a firebox (12) for cooking food, said firebox (12) having a heat source (40) disposed therein and a firebox cover (13) substantially corresponding to said firebox (12);
- a firebox support assembly (14) for supporting said firebox (12);
- a cooking rack (42) disposed in said firebox substantially proximate to said heat source (40); and
- a warming rack (44) fixed to the firebox (12) above said cooking rack (12) such that said cooking rack (42) is disposed between said warming rack (44) assembly and said heat source (40).

9. A barbecue grill and cart assembly (10) comprising:
- a firebox (12) for cooking food, said firebox (12) having a heat source (40) disposed therein and a firebox cover (13) substantially corresponding to said firebox (12);
- a firebox support assembly (14) for supporting said firebox (12);
- a cooking rack (42) disposed in said firebox substantially proximate to said heat source (40); and
- a warming rack (44) fixed to the firebox (12) above said cooking rack (12) such that said cooking rack (42) is disposed between said warming rack (44) assembly and said heat source (40).

10. The barbecue grill and cart assembly (10) of any of claim 8 or 9 wherein said cooking rack (42) is disposed in the firebox (12) in a removable manner.

11. The barbecue grill and cart assembly (10) of any of claims 8 to 10 wherein said warming rack (44) is fixed to the firebox (12) in a removable manner.

12. The barbecue grill and cart assembly (10) of claim 11, further comprising:
- a hinge bracket (46) fixed to said firebox (12) and said cover (13), and hingedly fixing said firebox cover (13) to said firebox (12); and
- a rack support bracket (48) fixed to said hinge bracket (46) and extending therefrom into said firebox (12), said rack support bracket (48) being arranged and configured to releasably receive said warming rack (44).

13. The barbecue grill and cart assembly (10) of any of claims 8 to 12, wherein said warming rack assembly (44) further comprises:
- a rack support leg (52) extending from said warming rack (44) downward toward said cooking rack (42) to support said warming rack assembly (44) above said cooking rack (42).

14. The barbecue grill and cart assembly (10) of claim 13, wherein said firebox (12) further comprises:
- a support aperture (54) for releasably receiving said rack support leg (52).

15. A barbecue grill and cart assembly (10) of any of claims 1 to 14, further comprising:
- a firebox (12) for cooking food, said firebox (12) having an exterior portion and an interior portion having a heat source (40) disposed therein;
- a firebox support assembly (14) for supporting said firebox (12); and
- a folding shelf (58) being hingedly fixed to said exterior portion of said firebox (12).

16. A barbecue grill and cart assembly (10) comprising:
- a firebox (12) for cooking food, said firebox (12) having an exterior portion and an interior portion having a heat source (40) disposed therein;
- a firebox support assembly (14) for supporting said firebox (12); and
- a folding shelf (58) being hingedly fixed to said exterior portion of said firebox (12).

17. The barbecue grill and cart assembly (10) of any of claim 15 or 16, further comprising:
- a shelf body (60);
- a shelf bracket (64) fixed to said exterior portion of said firebox (12) and extending therefrom, said shelf bracket (64) having a keyhole aperture (66) and a U-shaped aperture (68) disposed above said keyhole aperture (66);
- a shelf support (70) fixed to said shelf body and being arranged and configured to engage said keyhole aperture (66) and said U-shaped aperture (68);
- wherein said U-shaped aperture (68) is arranged and configured to release a portion of said shelf support (70) such that said shelf support (70) pivots about said keyhole aperture (66).

18. A barbecue grill and cart assembly (10) of any of claims 15 to 18 further comprising:
- a firebox cover (13) substantially corresponding to said firebox (12), said interior portion of said firebox (12) having a cooking rack (42) removably disposed therein and substantially proximate to said heat source (40);
- a fuel source support assembly (28) fixed to said firebox support assembly (14);
- a warming rack (44) removably fixed to said interior portion of said firebox (12) above said cooking rack (42) such that said cooking rack (42) is disposed between said warming rack assembly (44) and said heat source (40).

19. The barbecue grill and cart assembly (10) of claim 18, wherein the fuel source support assembly (28) comprises:
- a fuel source support platform (30) fixed to said firebox support assembly (14) and arranged and configured to releasably receive a fuel source (16); and
- a fuel support guard (32) fixed to said firebox support assembly (14) and arranged and configured to releasably receive said fuel source (16), said fuel support guard (32) substantially corresponds to the shape of said fuel source (16).

20. The barbecue grill and cart assembly (10) of claim 19, wherein said fuel support guard (32) is size adjustable to accommodate fuel sources (16) of various sizes and arranged and configured to receive a portion of said firebox support assembly (14).

21. The barbecue grill and cart assembly of any of claims 18 to 20, further comprising:
- a hinge bracket (46) fixed to said interior portion of said firebox (12) and said firebox cover (13) such that said firebox cover (13) is hingedly fixed to said firebox (12);
- a rack support bracket (48) fixed to said hinge bracket (46) and extending therefrom into said firebox (12), said rack support bracket (48) being arranged and configured to releasably receive said warming rack (44); and
- a rack support leg (52) extending from said warming rack (44) downward toward said cooking rack (42) to support warming rack assembly (44) above said cooking rack (42);
wherein said interior of said firebox (12) is arranged and configured to releasably receive said rack support leg (52).
